# EUROPEAN PATENT SPECIFICATION

(11) **EP 1 426 474 B1**
(45) Date of publication and mention of the grant of the patent: **08.03.2006**
(21) Application number: 03022547.8
(22) Date of filing: 02.10.2003
(51) Int. Cl.: D04H 1/70, D04H 1/74, E04C 2/18, E04B 1/80

(54) **Process and apparatus for the production of multilayer mineral fibre plates**
Herstellungsverfahren und Vorrichtung zur Herstellung von mehrlagigen Mineralfaserplatten
Procédé et dispositif pour la production de panneaux multicouches en fibres minérales

(30) Priority: 26.11.2002 SI 200200284
(43) Date of publication of application: 09.06.2004
(73) Proprietor: Termo, D.D., Industrija Termicnih Izolacij, Skofja Loka, 4220 Skofja Loka (SI)
(72) Inventor: Dezelak, Janez, 1215 Medvode (SI); Mihovec, Bojan, 4220 Skofja Loka (SI); Bradesko, Franc, 4220 Skofja Loka (SI); Kladnik, Edvard, 1210 Ljubljana (SI)
(74) Representative: Hano, Christian

(56) References cited:
- US-A- 4 917 750
- US-A1- 2001 006 716

## Description

The invention relates to a process and apparatus for making multilayer plates and felts of rock/mineral or glass fibers. Plates and felts of the invention are used in the building industry as heat-insulation materials of preference. They have the advantage of exhibiting significantly improved mechanical properties.

Prior art rock or glass fiber plates are fabricated as homogeneous plates which means that all along the cross section of the plate the orientation of the fibers is the same. Plates are also known in the art wherein fiber density varies along the cross section, increasing toward the surface, the fibers retaining a uniform orientation. This is usually achieved by combining together several plates. Likewise, plates are known in the art wherein the core is made of a homogeneous plate to which a plaster plate is added. Plates are also known in the art wherein fiber orientation is altered to vary the mechanical properties of the plate. Such plates are disclosed in, for example, US-A1-2001/0006716.

Prior art plates exhibit the following disadvantages:
- poor resistance to point loads,
- poor bending resistance,
- poor compression resistance.

The object and the scope of the inventive process and apparatus for the production of multilayer rock fiber plates or felts made of rock or glass fibers is to manufacture plates or felts that:
- are very elastic,
- exhibit high bending resistance,
- can stand point loads well,
- exhibit good compression resistance; whereby flexibility in the specification of the member and type of layers is facilitated.

Said object is achieved with a process and apparatus for fabricating multilayer plates or felts of rock or glass fibers according to the independent patent claims.

The invention shall hereinafter be described with reference to the preferred embodiments thereof and illustrations representing:
Figure 1: Apparatus for producing multilayer plates or felts;

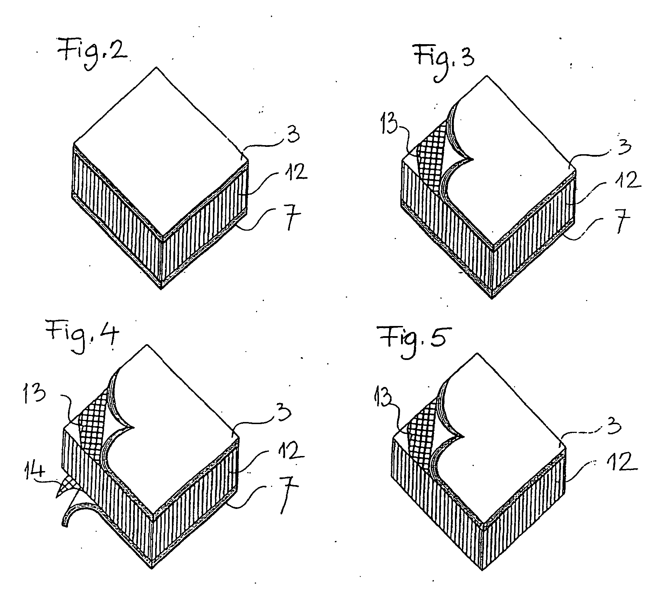

Figure 2: Three-layer plate;
Figure 3: Three-layer plate reinforced with an additional mesh;
Figure 4: Three-layer plate reinforced with two additional meshes;
Figure 5: Twc-layer plate reinforced with an additional mesh.

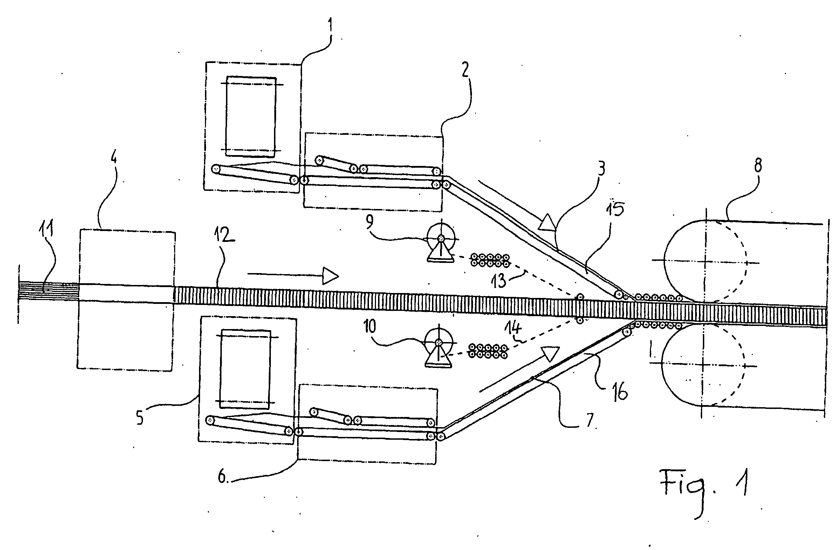

A homogeneous layer 11 of rock fibers is fed to the apparatus for producing multilayer plates according to the preferred embodiment and to Figure 1, and enters the device 4 for transforming a continuous layer of essentially longitudinally arranged fibers into a layer of essentially upright/vertical fibers. The device 4 is described in the SI Pat. No. 9012002 with the application date of 10. 24. 1990, published on 10. 31. 1997. A basic layer 12, having vertically arranged fibers, exits the device 4. Optionally, devices 9 and 10 for feeding the reinforcing meshes 13 and 14 to the basic layer may be added to the apparatus for producing multilayer plates. The unit 1 and the optional unit 5 deposit, preferably in a zigzag line, a layer of longitudinally arranged fibers onto the compression unit 2 and onto the optional compression unit 6. Thus formed additional layer 3 and optional additional layer 7 are conveyed along the line 15 and optional line 16 and laid over the basic layer 12 and over the optional reinforcing meshes 13 and 14. In the schematically represented hardening chamber 8 the basic layer 12, the optional meshes 13 and 14, and the additional layer 3 and the optional additional layer 7 are compressed together and bonded to a desired dimension.

Of course, additional layers and meshes may be added in a like manner.

Although there is no provision in the preferred embodiment for supplying additional binder between fiber layers, addition of binder is definitely within the scope of the invention; consequently, binder may readily be added according to procedures and methods known in the art.

Layer 12 has a density of 20 to 300 kg/m³ and a thickness of 10 to 300 mm.

Layers 3 and 7 have a density of 30 to 800 kg/m³ and a thickness of 1 to 50 mm.

The basic layer 12 having essentially vertically arranged fibers is lined on at least one side with an additional layer 3 and an optional additional layer 7 having essentially horizontally arranged fibers, and between the basic layer 12 on one hand and the additional layer 3 and the optional additional layer 7 on the other optional meshes 13 and 14 are inserted. The meshes 13 and 14 are preferably reinforcing meshes made of glass fibers, or alternatively of galvanized or rustless wire. Anyway, all and any plates or felts comprising a layer having essentially vertical fibers combined with at least one layer having essentially horizontal fibers are within the scope of the invention. The inventive plates and particularly felts may optionally be rolled into a roll. The only difference between plates and felts is that felts, containing less binder, are more flexible.

According to the process of the invention, onto the basic layer 12 having essentially vertically arranged fibers optional meshes 13 and 14 are first deposited, followed by the deposition of an additional layer 3 and an optional additional layer 7, whereupon the structure thus obtained is compressed and hardened according to processes known in the art.

The apparatus of the invention is comprised of a device 4 for transforming the orientation of the fibers, of optional devices 9 and 10 for feeding the meshes 13 and 14, of unit 1 and optional unit 5 for making an additional layer 3 and an optional additional layer 7, with compression unit 2 and optional compression unit 6, and with line 15 and optional line 16, and of a chamber 8.

## Claims

1. A method for producing multilayer plates or felts of rock or glass fibers wherein
a continuous layer (11) of essentially longitudinally arranged fibers is transformed into a basic layer (12) having essentially vertical fibers,
an additional layer (3, 7) of essentially horizontal fibers is made and deposited on at least one side of the basic layer (12) to form a structure
**characterized in that**
the continuous layer (11) and the additional layer (3, 7) are fed from different sources, and the structure is compressed and hardened

2. The method according to claim 1, wherein a reinforcing mesh (13, 14) is deposited onto at least one side of the basic layer (12) before an additional layer (3, 7) is deposited on that side.

3. An apparatus for producing multilayer plates or felts of rock or glass fibers comprising
a device (4) for transforming a continuous layer (11) of essentially longitudinally arranged fibers into a basic layer (12) having essentially vertical fibers,
at least one unit (1, 5) for making an additional layer (3, 7) of essentially horizontal fibers, at least one compression unit (2, 6) for compressing the at least one additional layer (3, 7),
at least one lining unit (15, 16) for lining the at least one compressed additional layer (3, 7) onto a corresponding side of the basic layer (12) to form a structure,
charcterized in that
the continuous layer (11) and the additional layer (3, 7) being fed from different sources, and
a hardening chamber (8) is provided for compressing and hardening the structure.

4. Apparatus according to claim 3, comprising at least one feeding device (9, 10) for feeding a reinforcing mesh (13, 14) onto at least one side of the basic layer (12) before an additional layer (3, 7) is deposited on that side.

## Patentansprüche

1. Verfahren zur Herstellung von mehrlagigen Platten oder Filzen aus Stein- oder Glasfasern, bei welchem
- eine fortlaufende Lage (11) von im Wesentlichen längs angeordneten Fasern in eine Basislage (12) umgeformt wird, die im Wesentlichen vertikale Fasern hat, und
- eine zusätzliche Lage (3, 7) aus im Wesentlichen horizontalen Fasern hergestellt und auf wenigstens einer Seite der Basislage (12) zur Bildung eines Aufbaus abgelegt wird,
**dadurch gekennzeichnet,**
- **dass** die fortlaufende Lage (11) und die zusätzliche Lage (3, 7) aus unterschiedlichen Quellen zugeführt werden und
- **dass** der Aufbau zusammengedrückt und gehärtet wird.

2. Verfahren nach Anspruch 1, bei welchem ein verstärkendes Netz (13, 14) auf wenigstens einer Seite der Basislage (12) angeordnet wird, bevor eine zusätzliche Lage (3, 7) auf dieser Seite abgelegt wird.

3. Vorrichtung zum Herstellen von mehrlagigen Platten oder Filzen aus Stein- oder Glasfasern
- mit einer Vorrichtung (4) zum Umformen einer fortlaufenden Lage (11) aus im Wesentlichen längs angeordneten Fasern in eine Basislage (12) mit im Wesentlichen vertikalen Fasern,
- mit wenigstens einer Einheit (1, 5) zur Herstellung einer zusätzlichen Lage (3, 7) aus im Wesentlichen horizontalen Fasern,
- mit wenigstens einer Zusammendrückeinheit (2, 6) zum Zusammendrücken der wenigstens einen zusätzlichen Lage (3, 7),
- mit wenigstens einer Belegeeinheit (15, 16) zum Belegen der wenigstens einen zusammengedrückten zusätzlichen Lage (3, 7) auf einer entsprechenden Seite der Basislage (12) zur Bildung eines Aufbaus,
**dadurch gekennzeichnet,**
- **dass** die fortlaufende Lage (11) und die zusätzliche Lage (3, 7) von unterschiedlichen Quellen zugeführt sind und
- **dass** eine Härtungskammer (8) zum Zusammendrücken und Härten des Aufbaus vorgesehen ist.

4. Vorrichtung nach Anspruch 3 mit wenigstens einer Zuführvorrichtung (9, 10) zum Zuführen eines verstärkenden Netzes (13, 14) auf wenigstens eine Seite der Basislage (12), bevor eine zusätzliche Lage (3, 7) auf dieser Seite abgelegt wird.

## Revendications

1. Procédé de fabrication de plaques ou de feutres multicouches en fibres de roche ou de verre, dans lequel
une couche continue (11) de fibres disposées essentiellement longitudinalement est transformée en une couche de base (12) ayant des fibres essentiellement verticales,
une couche supplémentaire (3, 7) de fibres essentiellement horizontales est réalisée et déposée sur au moins un côté de la couche de base (12) pour former une structure,
**caractérisé en ce que**
la couche continue (11) et la couche supplémentaire (3, 7) sont délivrées à partir de sources différentes, et la structure est comprimée et durcie.

2. Procédé selon la revendication 1, dans lequel un treillis de renforcement (13, 14) est déposé sur au moins un côté de la couche de base (12) avant qu'une couche supplémentaire (3, 7) ne soit déposée sur ce côté.

3. Dispositif de fabrication de plaques ou de feutres multicouches en fibres de roche ou de verre, comprenant
un dispositif (4) pour transformer une couche continue (11) de fibres disposées essentiellement longitudinalement en une couche de base (12) ayant des fibres essentiellement verticales,
au moins une unité (1, 5) pour réaliser une couche supplémentaire (3, 7) de fibres essentiellement horizontales, au moins une unité de compression (2, 6) pour comprimer l'au moins une couche supplémentaire (3, 7),
au moins une unité de garnissage (15, 16) pour garnir l'au moins une couche supplémentaire comprimée (3, 7), sur un côté correspondant de la couche de base (12) afin de former une structure,
**caractérisé en ce que**
la couche continue (11) et la couche supplémentaire (3, 7) sont délivrées à partir de sources différentes, et
une chambre de durcissement (8) est prévue pour comprimer et durcir la structure.

4. Dispositif selon la revendication 3, comprenant au moins un dispositif d'alimentation (9, 10) pour délivrer un treillis de renforcement (13, 14) sur au moins un côté de la couche de base (12) avant que ne soit déposée sur ce côté une couche supplémentaire (3, 7).
